# EUROPEAN PATENT APPLICATION

(11) **EP 1 528 753 A1**
(43) Date of publication of application: **04.05.2005**
(21) Application number: 04255947.6
(22) Date of filing: 29.09.2004
(51) Int. Cl.: H04L 29/08, H04L 12/58, H04Q 7/22

(54) **A method and apparatus for network initiated event reminder alerting**

(30) Priority: 31.10.2003 US 698916
(71) Applicant: LUCENT TECHNOLOGIES INC., Murray Hill, New Jersey 07974-0636 (US)
(72) Inventor: Benco, David S., Winfield, IL 60190 (US); Overend, Kevin J., Elmhurst, IL 60126 (US); Sheen, Baoling S., Naperville, IL 60565 (US); True, Sandra Lynn, St. Charles, IL 60175 (US); Voight, Kenneth J., Sugar Grove, IL 60554 (US)
(74) Representative: Watts, Christopher Malcolm Kelway, Dr.

(57) **Abstract**

This invention relates to a method and apparatus for network initiated event reminder alerting. More particularly, the invention is directed to a system (10) to provide network components that initiate an event reminder call prior to an upcoming event to alert a mobile subscriber (12) of the event such as an appointment or a meeting. The network supports the provisioning of a user defined event list and corresponding reminder data for alerting the subscriber prior to each event. The network monitors the event schedule and takes appropriate action.

## Description

### BACKGROUND OF THE INVENTION

This invention relates to a method and apparatus for network initiated event reminder alerting. More particularly, the invention is directed to a system to provide network components that initiate an event reminder call prior to an upcoming event to alert a mobile subscriber (through a mobile station) of the event such as an appointment or a meeting. The network supports the provisioning of a user defined event list and corresponding reminder data for alerting the subscriber prior to each event. The network monitors the event schedule and takes appropriate action to alert the subscriber through a mobile station.

While the invention is particularly directed to the art of automated reminders, and will be thus described with specific reference thereto, it will be appreciated that the invention may have usefulness in other fields and applications. For example, the invention may be used in any application where network initiated alerting is contemplated.

By way of background, technologies exist to monitor scheduling and provide event reminders in connection with operation of Personal Digital Assistants (PDAs). However, the data in a PDA is typically stored locally in the device and the event notification is typically made by way of a warning sound such as a beep.

Because of the local storage provided for in PDA technology, there is no need for network involvement. However, a lack of network involvement usually means less reliability. Furthermore, the warning sound (or beep) used as a reminder notification in PDA technology does not convey any detailed information on the nature of the reminder. As a consequence, the PDA user typically has to review his or her calendar to determine the event for which he or she was reminded. Moreover, PDA users typically do not carry PDAs and wireless phones with them at all times. As such, if a user does not always carry a PDA, a reminder will not always be conveyed to the user.

Accordingly, it would be useful and desirable to have a network initiated reminder system deployed through use of a mobile device that is usually carried by users, e.g. wireless phones, that will allow the users to receive a meaningful reminder that provides satisfactory detail.

The present invention contemplates a new and improved network initiated reminder and alert system that resolves the above-referenced difficulties and others.

### SUMMARY OF THE INVENTION

A method and apparatus for network initiated event reminder alerting are provided.

In one aspect of the invention, the system comprises a subscriber database having stored therein subscriber information, event data, event occurrence data, and alert time data, an event input module operative to receive the event data, the occurrence data and the alert time data from a mobile station and store the event data, the event occurrence data, and the alert data in the subscriber database, an event monitoring module operative to monitor the event data, the event occurrence data and the alert time data stored in the subscriber database and an event notification module operative to provide a network initiated call to the mobile station based on monitoring by the event monitoring module.

In another aspect of the invention, the event data comprises one of audio data and text data corresponding to a description of an event.

In another aspect of the invention, the event is a recurring event.

In another aspect of the invention, the event occurrence data comprises data on a time and date of an event.

In another aspect of the invention, the event occurrence data comprises text data.

In another aspect of the invention, the subscriber database further includes alert preference data corresponding to a subscriber preference on a form of alert.

In another aspect of the invention, the alert preference data comprises one of text data and voice data.

In another aspect of the invention, the event input module is further operative to translate voice data to text data.

In another aspect of the invention, the event input module is further operative to translate text data to voice data.

In another aspect of the invention, the network initiated call comprises an announcement.

In another aspect of the invention, the network initiated call comprises text data.

In another aspect of the invention, the method comprises receiving event data, occurrence data and alert time data from a mobile station, storing the event data, the event occurrence data, and the alert data in a subscriber database, monitoring the event data, the event occurrence data and the alert time data stored in the subscriber database and initiating a call to the mobile station based on the monitoring.

In another aspect of the invention, the receiving comprises receiving one of audio data and text data corresponding to a description of an event.

In another aspect of the invention, the event is a recurring event.

In another aspect of the invention, the receiving comprises receiving one of audio data and text data on the event occurrence data which comprises data on a time and date of an event.

In another aspect of the invention, the method further comprises translating the event occurrence data that is received as audio data to text data.

In another aspect of the invention, the method further comprises receiving from the subscriber alert preference data corresponding to a subscriber preference on a form of alert.

In another aspect of the invention, the alert preference data comprises one of text data and voice data.

In another aspect of the invention, the method further comprises translating voice data to text data.

In another aspect of the invention, the method further comprises translating text data to voice data.

In another aspect of the invention, initiating the call comprises initiating an announcement.

In another aspect of the invention, initiating the call comprises initiating a text message call.

In another aspect of the invention, the system comprises means for receiving event data, occurrence data and alert time data from a mobile station, means for storing the event data, the event occurrence data, and the alert data in a subscriber database, means for monitoring the event data, the event occurrence data and the alert time data stored in the subscriber database and means for initiating a call to the mobile station based on the monitoring.

In another aspect of the invention, the means for receiving comprises means for receiving one of audio data and text data corresponding to a description of an event.

In another aspect of the invention, the event is a recurring event.

In another aspect of the invention, the means for receiving comprises means for receiving one of audio data and text data on the event occurrence data which comprises data on a time and date of an event.

In another aspect of the invention, the system further comprises means for translating the event occurrence data that is received as audio data to text data.

In another aspect of the invention, the system further comprises means for receiving from the subscriber alert preference data corresponding to a subscriber preference on a form of alert.

In another aspect of the invention, the alert preference data comprises one of text data and voice data.

In another aspect of the invention, the system further comprises means for translating voice data to text data.

In another aspect of the invention, the system further comprises means for translating text data to voice data.

In another aspect of the invention, means for initiating the call comprises means for initiating an announcement.

In another aspect of the invention, means for initiating the call comprises means for initiating a text message call.

Further scope of the applicability of the present invention will become apparent from the detailed description provided below. It should be understood, however, that the detailed description and specific examples, while indicating preferred embodiments of the invention, are given by way of illustration only, since various changes and modifications within the spirit and scope of the invention will become apparent to those skilled in the art.

### DESCRIPTION OF THE DRAWINGS

The present invention exists in the construction, arrangement, and combination of the various parts of the device, and steps of the method, whereby the objects contemplated are attained as hereinafter more fully set forth, specifically pointed out in the claims, and illustrated in the accompanying drawings in which:

Figure 1 illustrates a network into which the present invention may be incorporated;

Figure 2 is a block diagram of a mobile switching center (MSC) according to the present invention;

Figure 3 is an illustrative view of a database structure according to the present invention;

Figure 4 is a flow chart illustrating a method according to the present invention;

Figure 5 is a call flow, or sequence diagram, illustrating an embodiment of the present invention; and,

Figure 6 is a call flow, or sequence diagram, illustrating an embodiment of the present invention.

### DETAILED DESCRIPTION OF THE PREFERRED EMBODIMENTS

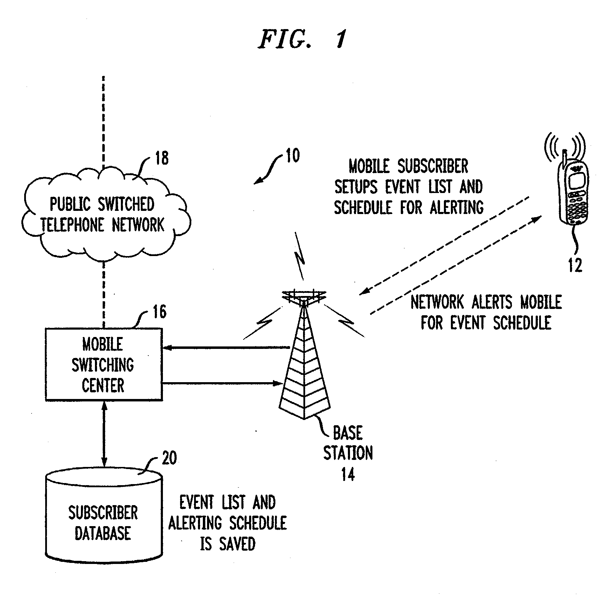

Referring now to the drawings wherein the showings are for purposes of illustrating the preferred embodiments of the invention only and not for purposes of limiting same, Figure 1 provides a view of an exemplary network into which the system according to the present invention may be implemented. As shown, a network 10 communicates with a mobile station 12. The network 10 may be formed in a variety of configurations; however, as illustrated, it comprises a base station, or cell site, 14 which communicates with a mobile switching center (MSC) 16. The mobile switching center (MSC) 16 may communicate with a variety of other networks or network components but, as shown, it communicates with a public switched telephone network (PSTN) 18. In addition, the mobile switching center (MSC) 16 communicates with a subscriber database 20.

As to the mobile station 12, it may comprise any of a variety of known mobile communication devices such as wireless phones, personal digital assistance (PDAs) (with wireless connections), pagers, ... etc. As will be described in more detail in connection with Figures 2 through 6, the mobile station 12 communicates with the base station 14 to set-up an event list and schedule for alerting within the network, i.e., the mobile switching center (MSC) 16 and appropriate databases. Mobile station 12 is also operative to receive the network alerts based on the event list and schedule that is set-up by the user of the mobile station 12 within the network. Operation of the mobile station 12 according to the present invention also preferably depends on whether a user of mobile station 12 subscribes to the alert service of the present invention as provided by a service provider. Such subscription data is then maintained by the network.

In operation, and as noted, a subscribed mobile station 12 is used to set-up an event list and a schedule for alerting the mobile station 12. More specifically, the mobile station 12 accomplishes this by communicating with the base station 14 which, in turn, communicates this information to the mobile switching center (MSC) 16 and takes appropriate action.

In this regard, mobile switching center (MSC) 16, which will be described in greater detail in connection with Figure 2, is operative to facilitate the set-up of the event list and schedule, receive appropriate data, determine if the user of mobile station 12 is a valid subscriber of the appropriate service, and otherwise facilitate the subsequent network initiated alerting of the mobile station 12. It should also be appreciated that not all networks use a mobile switching center, per se. However, the present invention may nonetheless be applied to whatever network component performs the primary switching functions.

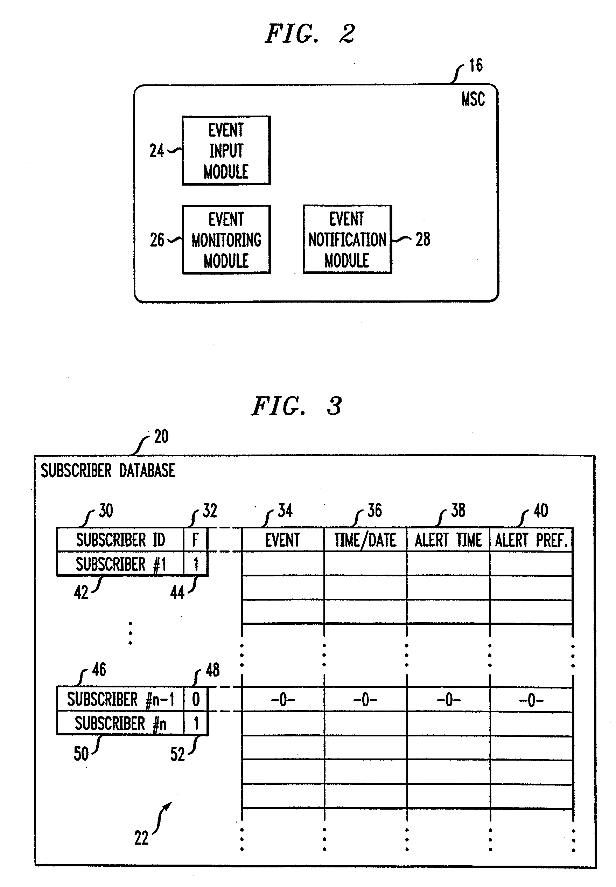

The subscriber database 20, which will be described in greater detail in connection with Figure 3, can be located at a variety of locations including in an appropriate home location register (HLR) associated with the mobile station 12. For simplicity, the subscriber database 20 is shown as a stand alone database; however, it might reside in a variety of locations and take a variety of forms. For implementation of the present invention, a feature of the subscriber database is that it stores therein an event list and an alerting schedule to facilitate the network initiated reminders and alerts according to the present invention. Specifically, the subscriber database has stored therein subscriber information, event data, event occurrence data and alert time data.

Referring now to Figure 2, a block diagram of a mobile switching center (MSC) 16 according to the present invention is illustrated. It should be appreciated that the mobile switching center (MSC) 16 facilitates a variety of network functions that are well known to those of skill in the art. The primary emphasis of Figure 2, however, is to illustrate the modifications made to the mobile switching center (MSC) to accommodate the present invention. The typically known network elements and functions of the mobile switching center are not illustrated.

With that in mind, the mobile switching center (MSC) 16 includes an event input module 24, an event monitoring module 26, and an event notification module 28. The event input module 24 is operative to receive the event data, the occurrence data, and the alert time data from a mobile station 12 of a subscriber and store the event data, the event occurrence data, and the alert time data in the subscriber database 20. Furthermore, the event input module 24 is also operative to translate voice data to text data and/or text data to voice data. Procedures for accomplishing such translations are well known in the art. The event monitoring module 26 is operative to monitor the event data, the event occurrence data, and the alert time data stored in the subscriber database. In this regard, the event monitoring module 26 will trigger the event notification module 28 into operation upon detection of a necessary alert. Last, the event notification module 28 is operative to provide a network initiated call to a subscriber, e.g., mobile station 12, based on the monitoring by the event monitoring module. Like the event input module 24, the event notification module 28 includes means for translating voice or audio data to text data and text data to audio data using any of a variety of known techniques.

Referring now to Figure 3, subscriber database 20 having a user-defined event list 22 formed as a part thereof is shown. As can be seen, the subscriber database 20 includes subscriber identification information 30, subscriber information in the form of flag data (F) 32 to indicate whether a subscriber subscribes to the alert service, event data 34, event occurrence data 36 taking the form of time and date data, alert time data 38, and alert preference data 40. It should be appreciated that the data configuration and structure is illustrated in but one of a variety of possible manners.

In the example shown in Figure 3, subscriber # 1 occupies data block 42 and is shown to have a subscriber information flag set to "1" at 44. The illustration of the event list does not show actual data within the data blocks for convenience, given that the nature of the data may vary from application to application. For example, event data 34 may comprise either audio data that is input by a user or text data that could likewise be input by a user. In either form, the event data 34 corresponds to a description of an event, whether it be a simple text word such as "meeting" or a more lengthy audio segment recorded by a subscriber. As noted above, the event input module 24 is operative and may be implemented to translate audio data to text data or text data to audio data, depending on the objectives of the user.

The event occurrence data 36, in one embodiment, comprises data on a time and date of the corresponding event. The alert time data 38 comprises data on a specified time to alert the subscriber through mobile station 12 that the event will be occurring. For example, the alert time data may indicate that the subscriber be notified one hour before the event. Of course, the data may also take many forms. In most circumstances, the event occurrence data 36 will comprise text data so that it can be appropriately monitored by the event monitoring module 26. Likewise, the alert time data 38 is also, in most circumstances, stored as text data for appropriate monitoring and notification by the MSC.

The alert preference data 40 comprises an indication as to a subscriber preference of the form of the alert to be provided to the subscriber. In this regard, the alert preference data 40 comprises one of an indication of text data or voice data. This information is used by the event notification module 28 when it provides appropriate notification to a mobile station 12. In this way, the event notification module 28 can be used to provide an audio announcement to the mobile station 12 or a text message to be viewed on the mobile station 12.

At data block 46, a subscriber # n-1 is shown as having a subscriber information flag reset to "0" at 48. Because the subscriber flag is indicated as being "0" in this case, no data need be entered in the event list. However, as shown, a default value of zero may also be input in the appropriate data block. Like the subscriber # 1, a subscriber # n, shown at 50, has a subscriber information flag set to "1". Again, because of the variety of forms that the event data, event occurrence data, alert time data, and alert preference data may take, no actual data is shown as being stored in these blocks.

Although not shown, an additional field may be provided to indicate whether the event is a recurring event. In this case, the data field would also preferably include an indication as to the frequency at which the event will occur. This will allow for more effective monitoring by the event monitoring module 26. A recurring event data field also allows the system to delete events from the event listing for which notification and alert has already been provided, yet maintain the recurring events therein so that future alerts can be provided.

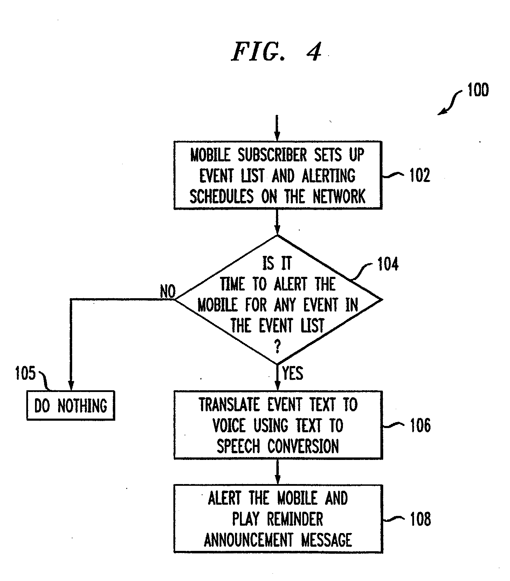

Referring now to Figure 4, an exemplary method 100 is illustrated. It should be appreciated that the method 100 may be implemented using the network components illustrated in Figures 1, 2 and 3, or variations thereof, and appropriate software routines that are distributed among those components in manners that will be apparent to those of skill in the art upon reading and understanding the present invention. Of course, variations of the structure and objectives of the present invention may be implemented and still fall within the scope of the present invention.

As shown, the method 100 includes initially allowing the mobile subscriber who uses mobile station 12 to set-up an event list and alert schedules on the network (step 102). As should be understood from above, the mobile switching center (MSC) 16 receives the event data, event occurrence data, and alert time data from mobile station 12. The mobile switching center (MSC) 16 then stores the event data, the event occurrence data, and the alert time data in a subscriber database 20 in a format such as that shown in Figure 3. Alert preference data may also be provided and stored. The data input to the mobile switching center (MSC) 16 and the storing of the data in the subscriber database is handled by the event input module 24.

The mobile switching center (MSC) 16 also includes the event monitoring module 26 which monitors the subscriber database 20 (e.g., data fields 34, 36, 38 in Figure 3) to determine whether it is time to alert the mobile station 12 for any of the events listed in the event list 22 (step 104). If it is determined that no such alert should be undertaken, the system "does nothing" (step 106). However, if the event monitoring module 26 determines that an event will occur for which an alert should be provided, in one embodiment, the event text is translated to a voice using text-to-speech conversion techniques (step 106). Next, the mobile station 12 is alerted and the announcement is played to the mobile station 12 using the event notification module 28 (step 108).

It is to be appreciated that the method of Figure 4 illustrates but one possible operation method for the present invention. Other variations should be apparent from a reading and understanding of the present invention. For example, the event data may be stored as audio data representing a recording of the subscriber's voice (stating, for example, "You have a group meeting in one hour"). In that case, no text to voice translation is necessary if the user alert preference 40 indicates that audio alerts should be provided.

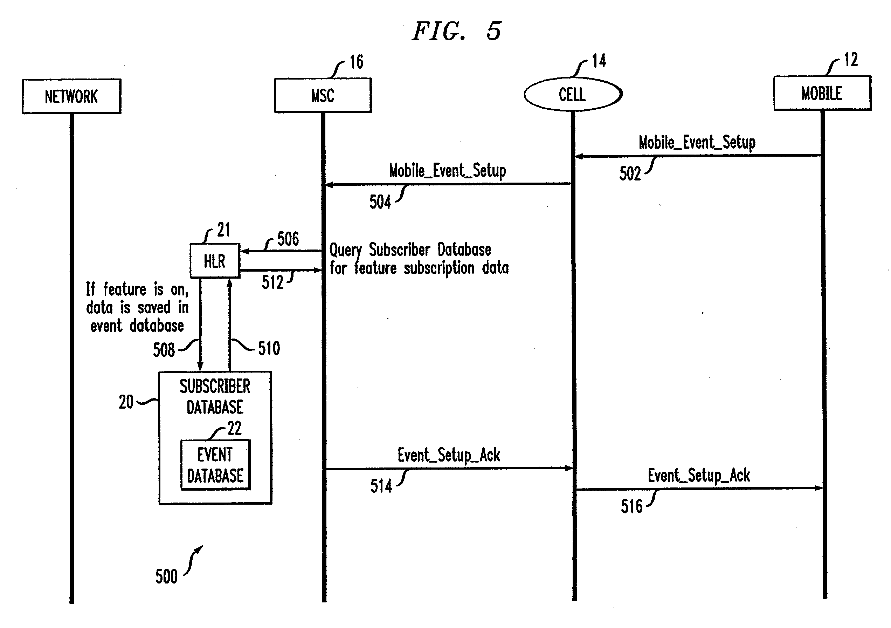

Referring now to Figure 5, a call flow, or sequence diagram, 500 is provided to illustrate the set-up for the event list 22, as identified in Figure 3. As shown, the mobile station 12 sends a Mobile Event Set-up request 502 to a cell site 14. It is to be appreciated that the Mobile Event Set-up request may include the event data, the event occurrence data, the alert time data, and the alert preference data.

The Mobile Event Set-up request 504 is then forwarded on to the mobile switching center (MSC) 16 and received by the event input module 24. The input module 24 of the mobile switching center (MSC) 16 then queries the subscriber database 20 through the home location register (HLR) 21, as shown at 506 and 508. The event listing 22 within the subscriber database 20 (as shown in Figure 3, for example) is accessed and the appropriate data is stored therein based on the data provided in the set-up message 502, 504. Once the task is completed, the mobile switching center (MSC) 16 is signaled, as shown at lines 510 and 512. The event input module 24 of the mobile switching center (MSC) 16 then sends an Event Set-up Acknowledge message back to the cell site 14 and then on to the mobile station 12, as shown at lines 514 and 516. In this way, the mobile station 12 is assured that the event has been listed and will be appropriately monitored by the network so that a suitable notification can be sent to the mobile station 12.

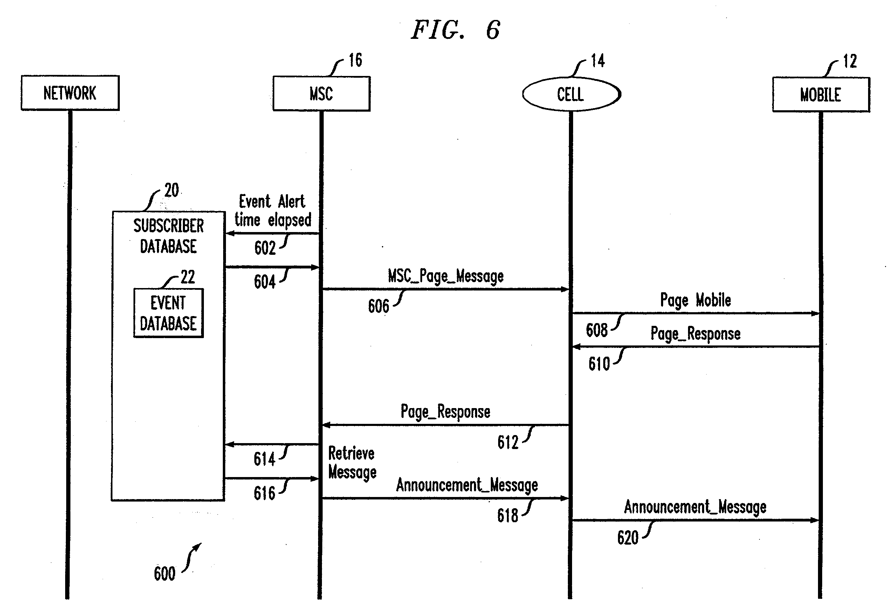

Once the subscriber sets up the event alerting mechanism of the present invention, the mobile switching center (MSC) 16 monitors the subscriber database 20 (e.g., the fields for the event data, the event occurrence data and the alert time data) to determine when an alert to the mobile station 12 will be necessary. Referring now to Figure 6, the monitoring is accomplished by using the event monitoring module 26 of the mobile switching center 16. Monitoring techniques are well known in the art. Upon detection that an event alert time stored in the database 20 has elapsed, the mobile switching center (MSC) 16 obtains appropriate information from the subscriber database, i.e., event list 22, as shown at lines 602 and 604. Through the event notification module 28, the mobile switching center (MSC) 16 then initiates the reminder or alert call. An MSC page message 606 is sent to a cell site 14 which then forwards a page mobile message 608 to the mobile station 12. The page mobile message may take the form of a ring or other indication to the mobile station 12 that an alert is forthcoming. The mobile station 12 then answers the page by providing a page response back to the mobile switching center (MSC) 16, as shown at lines 610 and 612. This may be accomplished by simply answering the call. The appropriate message information is then retrieved from the event database as shown at lines 614 and 616, and then an announcement message is provided to the mobile station 12, as shown at lines 618 and 620. The form of the alert may be based on the alert preference data 40.

It should be appreciated that the call flow 600 shown in Figure 6 is but one example of many circumstances that may occur with a system according to the present invention. For example, the message ultimately forwarded to the mobile station 12 as an alert may also take the form of a text message. The network (e.g., the event notification module) can determine from the alert preference information 40 whether an announcement or text message would be appropriate for the specified user. Likewise, variations in the types of data within the system may dictate variations in the call flow. For example, text-to-voice translation or voice-to-text translation may be included as steps within this procedure.

The above description merely provides a disclosure of particular embodiments of the invention and is not intended for the purposes of limiting the same thereto. As such, the invention is not limited to only the above-described embodiments. Rather, it is recognized that one skilled in the art could conceive alternative embodiments that fall within the scope of the invention.

## Claims

1. A system providing reminders and alerting to mobile station subscribers for selected events, the system comprising:
a subscriber database having stored therein subscriber information, event data, event occurrence data, and alert time data;
an event input module operative to receive the event data, the occurrence data and the alert time data from a mobile station and store the event data, the event occurrence data, and the alert data in the subscriber database;
an event monitoring module operative to monitor the event data, the event occurrence data and the alert time data stored in the subscriber database; and,
an event notification module operative to provide a network initiated call to the mobile station based on monitoring by the event monitoring module.

2. The system as set forth in claim wherein the event data comprises one of audio data and text data corresponding to a description of an event.

3. The system as set forth in claim 1 wherein the event occurrence data comprises data on a time and date of an event.

4. The system as set forth in claim 1 wherein the subscriber database further includes alert preference data corresponding to a subscriber preference on a form of alert.

5. A method for providing reminders and alerts to mobile station subscribers for selected events, the method comprising:
receiving event data, occurrence data and alert time data from a mobile station;
storing the event data, the event occurrence data, and the alert data in a subscriber database;
monitoring the event data, the event occurrence data and the alert time data stored in the subscriber database; and,
initiating a call to the mobile station based on the monitoring.

6. The method as set forth in claim 5 wherein the receiving comprises receiving one of audio data and text data corresponding to a description of an event.

7. The method as set forth in claim 5 further comprises receiving from the subscriber alert preference data corresponding to a subscriber preference on a form of alert.

8. A system for providing reminders and alerts to mobile station subscribers for selected events, the system comprising:
means for receiving event data, occurrence data and alert time data from a mobile station;
means for storing the event data, the event occurrence data, and the alert data in a subscriber database;
means for monitoring the event data, the event occurrence data and the alert time data stored in the subscriber database; and,
means for initiating a call to the mobile station based on the monitoring.

9. The system as set forth in claim 8 wherein the means for receiving comprises means for receiving one of audio data and text data corresponding to a description of an event.

10. The system as set forth in claim 8 further comprises means for receiving from the subscriber alert preference data corresponding to a subscriber preference on a form of alert.
